# FASCICULE DE BREVET EUROPEEN

(11) **EP 0 512 934 B1**
(45) Date de publication et mention de la délivrance du brevet: **25.01.1995**
(21) Numéro de dépôt: 92440050.0
(22) Date de dépôt: 28.04.1992
(51) Int. Cl.: A21C 3/02, A21C 9/08

(54) **Dispositif pour étirer et/ou écarter des pâtons**
Vorrichtung zum Strecken und/oder Entfernen von Brotteigstücken
Device for stretching and/or spreading bread dough pieces

(30) Priorité: 03.05.1991 FR 9105668
(43) Date de publication de la demande: 11.11.1992
(73) Titulaire: Voegtlin, René, F-67200 Oberhausbergen (FR)
(72) Inventeur: Voegtlin, René, F-67200 Oberhausbergen (FR)
(74) Mandataire: Rhein, Alain

(56) Documents cités:
- EP-A- 0 250 330
- GB-A- 1 255 513
- US-A- 2 856 060

## Description

L'invention concerne un dispositif polyvalent pour étirer ou écarter ou, simultanément, écarter et étirer, selon le cas, des pâtons préallongés entiers ou découpés en portions et provenant d'une façonneusedécoupeuse en vue de la fabrication industrielle de pains longs ou petits pains longs.

Bien entendu, la présente invention trouvera son application dans l'industrie spécialisée dans la fabrication de matériel pour boulangerie.

Dans le cadre de la fabrication de pains longs ou petits pains longs, il convient d'observer que, partant d'une boule de pâte délivrée, généralement, par une diviseuse-peseuse, une façonneuse vient à définir des pâtons aux formes sensiblement cylindriques et préallongées. Puis, lorsqu'il s'agit de fabriquer, plus particullèrement, des pains longs, ces pâtons préallongés sont introduits dans une étireuse leur conférant leur longueur définitive avant de les déposer dans l'enchaînement automatique des différentes phases de traitement d'une ligne de fabrication industrielle de ces pains longs. Ainsi, ces pâtons, de longueur définitive, peuvent être déposés sur des plateaux afin de subir une fermentation complémentaire préalablement à la cuisson.

Dans le cas de petits pains longs, ce procédé diffère quelque peu dans la mesure où les pâtons préallongés, en sortie de la façonneuse sont découpés en portions, lesquelles doivent être écartées, les unes par rapport aux autres de sorte que même après les augmentations de volume que sont amenés à subir ces portions de pâtons, lors de leur fermentation finale et au moment de leur cuisson, il persiste un espace libre entre elles pour garantir, précisément, une cuisson convenable au niveau de leurs extrémités.

Par ailleurs, lorsqu'un pâton préallongé, en sortie de la façonneuse, ne subit qu'une, voire deux ou trois découpes en vue de réaliser des pains que l'on peut qualifier de semi-longs, tels que des demi-baguettes ou des tiers de baguettes, il y a lieu, non seulement, d'écarter les portions de pâtons après découpe, mais, en outre, d'étirer lesdites portions avant de les acheminer au niveau de la phase de traitement suivante.

Il y a lieu d'observer, à ce propos, que l'opération d'étirage est indispensable pour la conception de pains longs. En effet, les façonneuses agissent sur les pâtons, habituellement, sous forme d'une pression correspondant à une action perpendiculaire à l'axe longitudinal de ces pâtons, ce qui limite, forcément, la longueur finale que peuvent obtenir ces derniers en sortie d'une telle façonneuse.

Une étireuse se distingue, précisément, de cette façonneuse dans la mesure où l'action qu'elle imprime aux pâtons est la combinaison d'une composante perpendiculaire à l'axe longitudinal de ces derniers et d'une composante en traction. Il est donc possible, dans ces conditions, de conférer à un pâton préallongé, en sortie d'une façonneuse, des grandes longueurs définitives.

Le problème ainsi posé, l'on constate qu'il existe déjà, à l'heure actuelle, des machines qui sont susceptibles, soit d'étirer des pâtons préallongés entiers, soit d'écarter des portions de pâtons découpés en sortie de la façonneuse. Toutefois, ces machines ne présentent aucune souplesse d'utilisation en raison de systèmes mécaniques n'autorisant que peu, voire, pas de réglage susceptible de leur conférer une certaine polyvalence.

Ainsi, on connaît, par exemple, par le document FR-A-2.565.069, un dispositif pour étirer des pâtons préallongés, ceci en vue de la fabrication industrielle de pains longs. Plus particulièrement ce dispositif comporte un ensemble tournant formé de disques venant à diverger de part et d'autre du plan médian du dispositif. Ces disques prennent en charge les pâtons préallongés et les restituent étirés après une course d'une valeur approximative d'un demi-cercle à travers un espace annulaire partiel en les faisant rouler contre la paroi d'une coquille fixe.

Il est clair qu'une telle étireuse n'est nullement polyvalente dans la mesure où elle se limite à remplir sa fonction première, à savoir étirer des pâtons préallongés entiers et elle n'est nullement adaptée à produire un écartement entre des portions de pâtons ayant été préalablement découpés.

On connaît, également, par le document US-A-3.168.056, un autre type de dispositif pour étirer des pâtons préallongés en vue de réaliser des pains longs. Plus particulièrement, ce dispositif emploie une série de courroies de type divergent, s'enroulant, partiellement, et en aval du dispositif, autour de poulies individuelles, tandis qu'en amont ces courroies viennent à s'enrouler autour d'un tambour moteur disposé transversalement au sens d'avance des pâtons et, donc, parallèlement à l'axe longitudinal de ces derniers. En fait, l'ensemble des brins supérieurs, correspondant à ces courroies divergentes, vient à définir un plan de traitement sur lequel sont amenés à évoluer les pâtons préallongés. Au-dessus de ce plan de traitement, s'étend un second convoyeur dont la courroie applique avec une certaine pression les pâtons sur ledit plan de traitement afin d'obtenir l'étirement désiré.

Il convient d'observer, en outre, que l'on peut régler, sur ce dispositif connu, l'importance selon laquelle les pâtons préallongés sont étirés, ceci en intervenant sur l'angle formé par deux courroies successives. Plus précisément, ces courroies coopèrent avec des guides à l'approche du tambour moteur, guides qui sont disposés sur une glissière située transversalement au sens d'avance des pâtons. Par ailleurs, sur ladite glissière et entre chacun des guides est enfilé un ressort que l'on peut, soit comprimer pour diminuer l'écartement des courroies à hauteur de leur extrémité amont ou, contrairement, décomprimer pour augmenter cet écartement.

Il est également précisé qu'en modifiant la taille ou la raideur de certains ressorts, l'on peut étirer plus ou moins certaines parties du pâton préallongé.

Malgré cela, un tel dispositif n'offre pas la possibilité d'écarter des portions de pâtons qui auraient été découpés en sortie de façonneuse.

Ainsi, cet écartement de portions de pâtons prédécoupés est, habituellement, obtenu au travers d'un dispositif distinct de ceux mentionnés ci-dessus. Généralement, ce dispositif consiste à placer, entre la bande transporteuse acheminant les portions de pâtons depuis la façonneuse-découpeuse et une unité de traitement située en aval, un faisceau de convoyeurs divergents. En fait, ces convoyeurs comportent, chacun, une courroie dont la largeur est sensiblement égale à la longueur des portions de pâtons. Par ailleurs, ces convoyeurs sont jointifs dans leur partie amont, tandis qu'ils viennent à s'écarter, progressivement, en direction de leur partie aval.

Au vu de ce qui précède, l'on observe qu'il est nécessaire de changer de convoyeurs et donc de dispositif dès l'instant que l'on modifie la longueur des petits pains où, encore, leur nombre. Il est bien évident que cela entraîne une augmentation sensible du coût de revient de l'installation pour la fabrication industrielle de pains longs ou petits pains longs.

Finalement, pour la fabrication de pains semi-longs, c'est-à-dire du type demi-baguette ou tiers de baguette, il convient d'associer, actuellement, un dispositif pour écarter les portions de pâtons découpés et un refaçonnage correspondant à l'état de la technique exposé ci-dessus.

En conclusion, l'on constate que l'inconvénient majeur procuré par ces dispositifs connus, qu'ils aient pour fonction d'étirer ou d'écarter un pâton préallongé ou des portions de pâtons, n'offrent aucune souplesse d'utilisation dans la mesure où ils ne sont adaptés, généralement, qu'à un type de pain donné, c'est-à-dire d'une longueur définie. Finalement, ce manque de souplesse se traduit par une installation très complexe et particulièrement onéreuse lorsque l'on désire fabriquer des pains de différentes tailles.

La présente invention a pour but de remédier à ces inconvénients en proposant un dispositif parfaitement polyvalent qui soit en mesure soit d'étirer un pâton préallongé, soit d'écarter des portions de pâtons prédécoupés ou, à la fois, d'écarter et d'étirer de telles portions de pâtons, ceci au travers de simples réglages qui peuvent être obtenus très rapidement.

L'invention telle qu'elle est caractérisée dans les revendications résout le problème et consiste en un dispositif polyvalent pour étirer ou écarter ou, simultanément, écarter et étirer, selon le cas, des pâtons préallongés entiers ou découpés en portions et provenant d'une façonneusedécoupeuse en vue de la fabrication industrielle de pains longs ou petits pains longs, ce dispositif comportant, de part et d'autre de son plan médian vertical, une série de cassettes disposées dans des plans verticaux et montées articulées dans leur partie amont, autour d'un axe sensiblement perpendiculaire au plan formé par une planche de traitement sur laquelle sont amenés à évoluer les pâtons préallongés entiers ou les portions de pâtons, ces cassettes intégrant, chacune, des poulies de renvoi à axe de rotation horizontal autour desquelles s'enroule, partiellement, une courroie torique, de manière à définir un brin actif respectant avec ladite planche de traitement, un espacement, cette courroie torique venant à boucler son circuit extérieurement à la cassette en s'enroulant partiellement, au moins autour d'un tambour moteur disposé perpendiculairement, audit plan médian vertical.

Selon une autre caractéristique de l'invention, le dispositif comporte des moyens de réglage pour positionner angulairement chacune des cassettes par rapport audit plan médian vertical.

Les avantages obtenus grâce à cette invention consistent, essentiellement, en ce que l'angle de divergence, par rapport au plan médian du dispositif, de chaque brin actif formé par une courroie peut être réglé individuellement en pivotant la cassette correspondante autour de son axe de rotation se situant perpendiculairement à la planche de traitement. Ceci revient à dire qu'en positionnant les cassettes de telle manière que l'angle formé par deux brins actifs successifs soit constant l'on obtient une uniformité de l'étirement produit sur un pâton préallongé entier.

Par contre, si l'on vient à définir des groupes de cassette de manière à réaliser, en quelque sorte, des convoyeurs de largeur correspondant à la longueur de portions de pâtons prédécoupés et qu'entre chacun de ces groupes de cassettes il est respecté un angle important, l'on pourra procéder, au travers de ce dispositif, à l'écartement desdites portions de pâtons. A ce propos, l'on notera que si ces groupes de cassettes peuvent être adaptés, en largeur, à la taille des portions de pâtons, il est également possible, sans difficulté, de définir autant de groupes de cassettes que de portions de pâtons.

Finalement, on observe que, si dans un même groupe de cassettes, celles-ci respectent les unes par rapport aux autres, un angle de divergence défini, ce dispositif pourra, non seulement, écarter des portions de pâtons prédécoupés, mais, en outre, étirer, individuellement, ces portions de pâtons.

Par conséquent, ce dispositif, conforme à l'invention, permet son adaptation à toutes les situations rencontrées dans le domaine de la fabrication de pains longs ou petits pains longs, sans compter que cette polyvalence se traduit par une économie substantielle au niveau de l'installation.

L'Invention est exposée ci-après plus en détail, à l'aide de dessins représentant seulement un mode d'exécution.
- la figure 1 représente une vue schématisée, en élévation et en coupe du dispositif conforme à l'invention, cette coupe traversant l'une des cassettes orientables ;
- la figure 2 représente une vue schématisée et en plan du dispositif, tel que représenté dans la figure 1, les cassettes ayant été rangées de manière à produire un étirement constant et sur toute la longueur d'un pâton préallongé entier en provenance d'une façonneuse ;
- la figure 3 représente une vue schématisée en plan du dispositif et illustrant le rangement des cassettes sous forme de groupes en vue d'assurer un simple écartement de portions de pâtons prédécoupés ;
- la figure 4 représente une vue analogue à la figure 3 dans la mesure où elle illustre la disposition des cassettes sous forme de groupes, toutefois et dans ce cas, lesdites cassettes d'un groupe sont divergentes les unes par rapport aux autres ceci de manière à produire, non seulement, l'écartement d'une portion de pâton mais, également, un étirement de cette portion, dans le cadre de cette figure 4 le dispositif fonctionnant, par conséquent, en tant qu'écarteuse-étireuse ;
- la figure 5 représente une vue schématisée d'une cassette sous forme d'une coupe effectuée selon V-V de la figure 1 ;
- la figure 6 représente une vue schématisée et en élévation d'un circuit de courroie torique selon un second mode de réalisation.

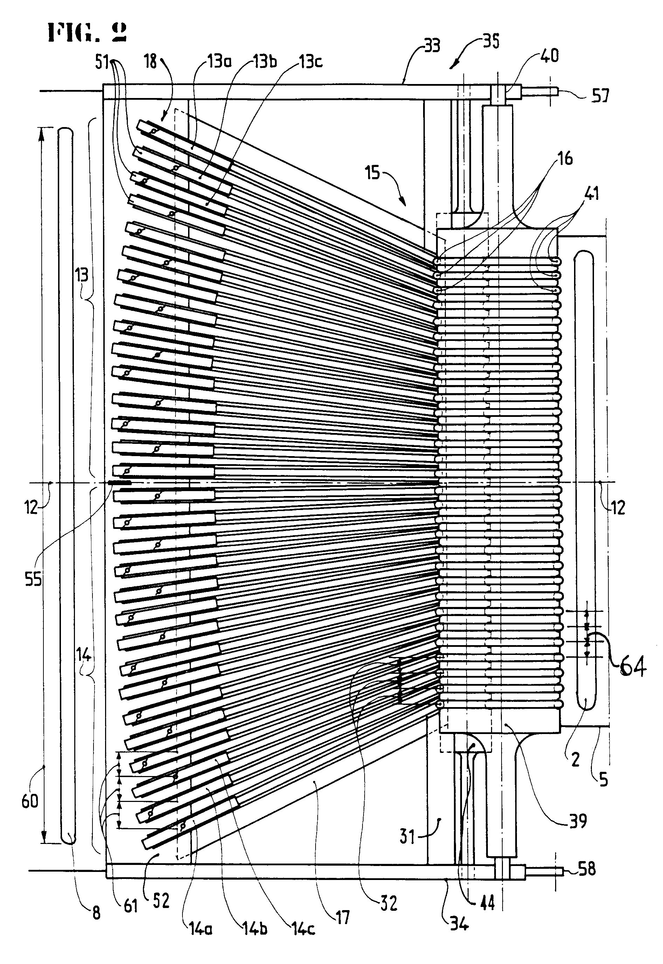

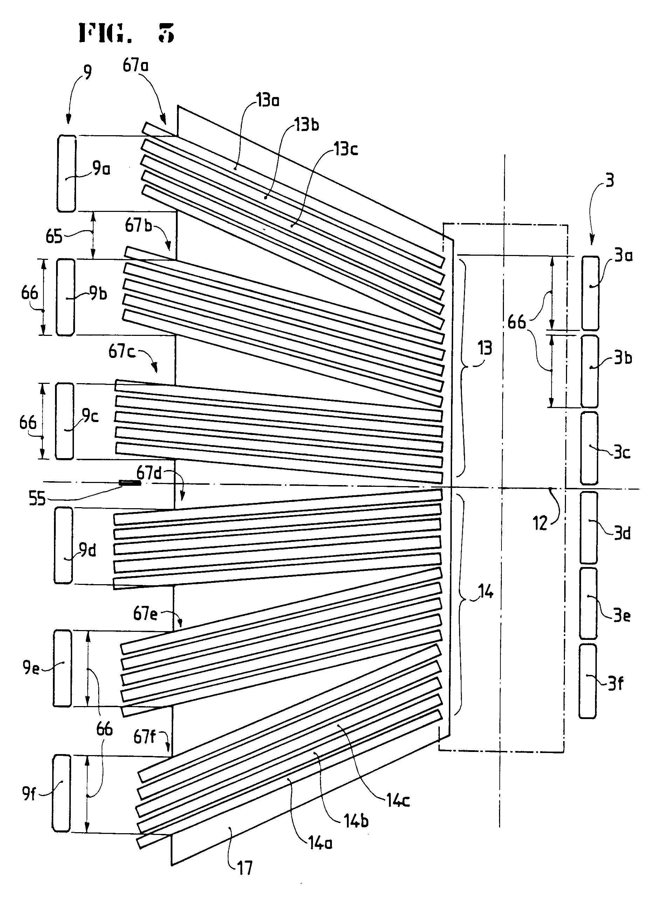

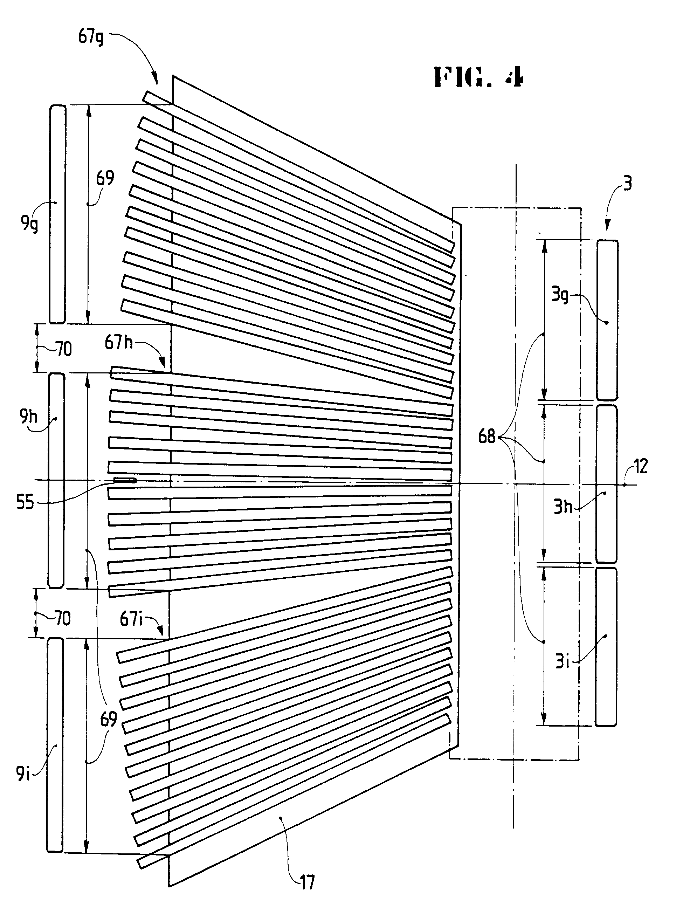

La présente invention, telle que représentée dans les dessins joints en annexe, est relative à un dispositif polyvalent 1 pour étirer ou écarter ou encore, simultanément, écarter et étirer, selon le cas, des pâtons préallongés entiers 2, visibles dans la figure 2, ou découpés en portions 3, tel que représenté dans les figures 3 et 4, ceci pour la fabrication de pains longs ou de petits pains longs.

Ainsi ce dispositif 1 est incorporé dans une ligne de fabrication industrielle de ces pains longs ou de ces petits pains longs, plus particulièrement, entre, d'une part, une façonneuse-découpeuse (non représentée) susceptible de délivrer des pâtons préallongés 2 et, éventuellement, découpés en portions 3 et, d'autre part, une unité de traitement en aval, par exemple, une chambre de fermentation complémentaire qui n'est, non plus représentée sur les dessins en annexe.

Dans tous les cas, l'on retrouve, en amont 4 de ce dispositif 1 un convoyeur d'amené 5 sur lequel sont déposés les pâtons préallongés entiers 2 ou les portions de pâtons 3, en sortie, précisément, de la façonneuse-découpeuse, tandis qu'en aval 6 est placé un convoyeur d'évacuation 7 sur lequel sont déposés les pâtons 8 ou portions de pâtons 9 traités et sortant de ce dispositif 1.

Par conséquent, l'on observe que les pâtons préallongés entiers 2 ou portions de pâtons 3 sont disposés transversalement par rapport au sens 10 de leur déplacement dans le dispositif 1. Celui-ci est sensiblement symétrique par rapport à un plan médian vertical 12 correspondant, également, à l'axe milieu d'un pâton préallongé sortant de la façonneuse.

En fait, et tel que déjà précisé plus haut, ce dispositif, conforme à l'invention, a pour fonction, soit, simplement, d'étirer des pâtons entiers préallongés 2, soit d'écarter des portions de pâtons 3 ayant été découpés préalablement, ou encore, simultanément, d'écarter et d'étirer de telles portions de pâtons 3.

Dans ce but et selon l'invention, le dispositif 1 comporte, de part et d'autre de son plan médian vertical 12, une série 13, 14 de cassettes 13a, 13b, 13c ... et 14a, 14b, 14c ... disposées dans des plans verticaux. D'ores et déjà, l'on peut préciser que le nombre de ces cassettes d'une série 13, 14 peut être quelconque. Toutefois, le nombre de cassettes dans une série 13, 14, doit être tel que le dispositif 1 peut s'adapter, parfaitement, à la fabrication de pains longs ou de petits pains longs aux dimensions habituellement rencontrées. A ce propos, l'on a pu s'apercevoir qu'un nombre voisin de quinze cassettes par série permet d'aboutir à de bons résultats dans ce sens.

En fait, tel que visible sur les différentes figures, ces cassettes 13a, 13b .... et 14a, 14b ... des deux séries 13, 14 sont montées articulées dans leur partie amont 15 autour d'un axe 16 qui est perpendiculaire au plan formé par une planche de traitement 17 s'étendant entre le convoyeur d'amenée 5 et le convoyeur d'évacuation 7 et sur laquelle viennent à évoluer les pâtons préallongés entiers 2 ou les portions de pâtons 3 en cours de traitement.

Par conséquent, au travers du montage pivotant de ces cassettes 13a, 13b ... et 14a, 14b ... celles-ci peuvent adopter, notamment, une position divergente de part et d'autre du plan médian vertical 12 du dispositif 1. Dans ce but, ces cassettes 13a, 13b ... et 14a, 14b, sont maintenues sensiblement jointives, précisément, dans leur partie amont 15 ce qui permet de les écarter, à hauteur de la partie aval 18 selon une côte réglable en fonction du but recherché.

De telles cassettes 13a, 13b ... et 14a, 14b... sont, en définitive. constituées, par deux flasques latéraux 19, 20 (voir également figure 5) entretoisés, notamment, par des axes 21, 22, 23, sur lesquels seront montés pivotantes des poulies de renvoi 24, 25, 26, ainsi que par une chape d'articulation 27 se situant, précisément, dans la partie amont 15 d'une telle cassette 13a, 13b ... et 14a, 14b... Cette chape d'articulation 27 est montée en rotation sur les extrémités 28, 29 d'un pivot 30 se présentant saillant, de part et d'autre, d'une traverse 31 laquelle est disposée perpendiculairement au plan médian vertical 12 et surplombe la planche de traitement 17. Cette traverse 31, comporte, par conséquent, autant de pivots 30 qu'il y a de cassettes 13a, 13b ... et 14a, 14b ... Ces pivots 30 se situent, en outre, sur l'axe de rotation 16 des cassettes et sont équidistants les uns par rapports aux autres selon une côte 32 réduite au minimum pour maintenir, quasiment jointives ces cassettes dans leur partie amont 15, tout en leur permettant de tourner autour de leur axe 16. La traverse 31 est, par ailleurs, rendue solidaire, à ses extrémités de deux côtés latéraux 33, 34 venant à composer le châssis 35 du dispositif 1 conforme à l'invention.

Tel que déjà indiqué ci-dessus, chacune de ces cassettes 13a, 13b ... et 14a, 14b ... intègre des poulies de renvoi 24, 25, 26. En fait, autour de ces dernières, vient s'enrouler, partiellement, une courroie torique 36 de manière à définir un brin actif 37 s'étendant au-dessus de la planche de traitement 17 tout en respectant avec cette dernière un espacement 38a, 38b, défini pour permettre la prise en charge positive des pâtons préallongés entiers 2 ou des portions de pâtons 3. Les caractéristiques de cet espacement 38a, 38b, seront développées plus en avant dans la description.

A ce propos, il y a lieu de signaler que la prise en charge des pâtons préallongés entiers 2 ou portions de pâtons 3 au travers des brins actifs 37 correspondant aux courroies 36 ne s'effectuera convenablement que dans la mesure où ces brins actifs 37 sont maintenus constamment en contact avec lesdits pâtons préallongés entiers 2 ou portions de pâtons 3. Dans ce but, entre les flasques latéraux 19, 20 d'une cassette 13a, 13b ... et 14a, 14b ...., est implantée une barrette 37a, sur la face inférieure de laquelle s'appuie le brin actif 37 de la courroie 36 de manière à préserver sa linéarité. Cette barrette 37a s'étend, préférentiellement, sur toute la longueur séparant les poulies de renvoi 24 et 26.

Finalement, après enroulement partiel autour des poulies de renvoi 24, 25, 26 implantées dans une cassette 13a, 13b ..., et 14a, 14b ... ladite courroie torique 36 vient à boucler son circuit extérieurement à cette dernière en venant s'enrouler au moins autour d'un tambour moteur 39 à axe de rotation perpendiculaire au plan médian vertical 12 et placé en amont des séries 13, 14, de cassettes.

Préférentiellement, ce tambour moteur 39 est monté en rotation, à ses extrémités, dans des paliers 40 aménagés au niveau des côtés latéraux 33, 34 du châssis 35.

Par ailleurs, ce tambour moteur 39 comporte autant de gorges d'entraînement 41 qu'il y a de courroies 36 et, donc, de cassettes 13a, 13b ... et 14a, 14b ...

Selon l'invention il est préconisé de ne faire intervenir que la souplesse en rotation des courroies toriques 36 au moment de pivoter lesdites cassettes 13a, 13b ... et 14a, 14b ... autour de leur axe 16. En ne jouant, ainsi, que sur la torsion de la courroie torique 36, dont l'élasticité à cet effet est considérable, il est possible de garantir une parfaite motricité de cette courroie torique 36.

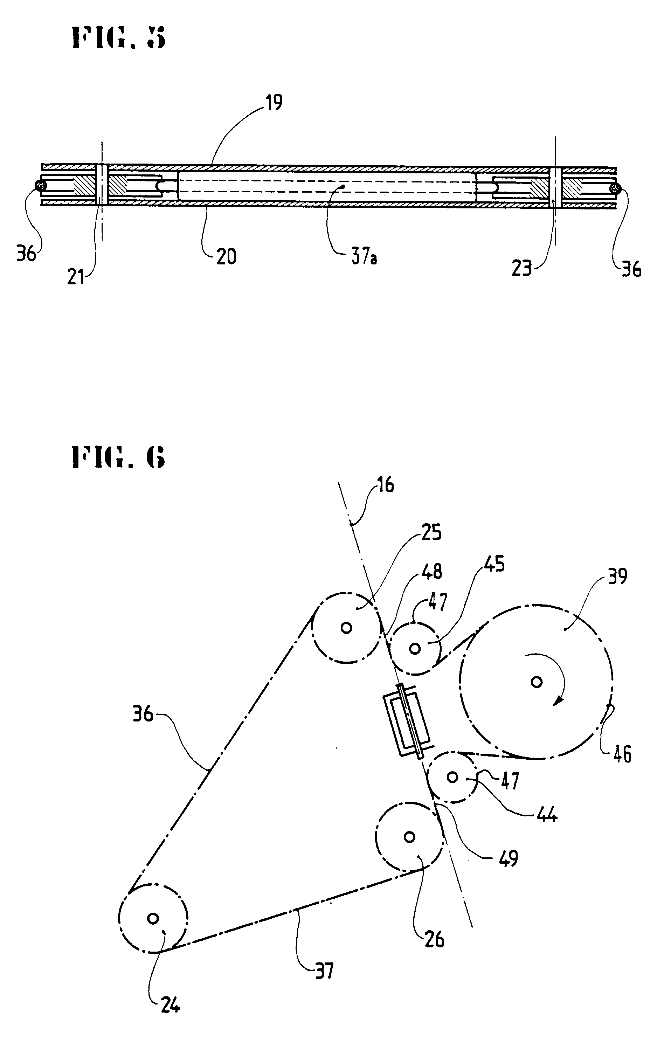

Dans ce but, deux 25, 26 des poulies d'une cassette 13a, 13b ... et 14a, 14b ... sont placées dans la partie amont 15 de cette dernière, de telle sorte que leur diamètre primitif 42, 43 soit tangent à l'axe de rotation 16. De plus, le tambour moteur 39 et un arbre de renvoi 44 ou, tel que visible dans la figure 6, deux arbres de renvoi 44, 45 intervenant dans le circuit extérieur parcouru par les courroies 36, sont également disposés de sorte que leur diamètre primitif 46, 47 soit tangent à l'axe de rotation 16 de ces cassettes 13a, 13b ... et 14a, 14b ... La disposition de ce tambour moteur 39 et/ou du ou des arbres de renvoi 44, 45 est, en outre, choisi de telle manière que lesdites courroies 36 viennent à définir, au moment de quitter, respectivement, d'entrer en contact avec les poulies 25, 26, un brin 48, 49 d'axe confondu avec l'axe de rotation 16 d'une cassette 13a, 13b ... et 14a, 14b...

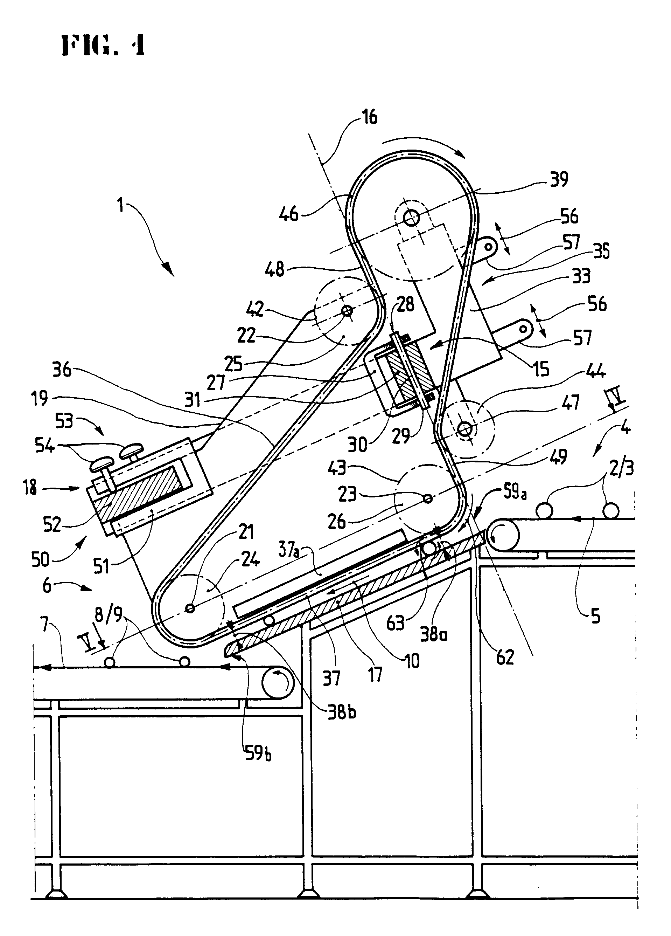

La figure 1 représente le cas d'un mode de réalisation où la courroie 36, dans son circuit extérieur à la cassette, ne vient à s'enrouler qu'autour du tambour moteur 39 et autour d'un arbre de renvoi 44. Dans ces conditions, l'on remarquera que cette courroie 36 s'enroule partiellement et du côté interne, sur la poulie de sortie 25.

Par contre, dans le schéma illustré dans la figure 6, il est employé deux arbres de renvoi 44, 45 au niveau du circuit extérieur parcouru par une courroie 36, celle-ci venant, alors, à s'enrouler, extérieurement, sur l'ensemble des poulies de renvoi 25, 26, 27 d'une cassette.

En dehors d'une parfaite motricité, l'on constate qu'au travers des caractéristiques ci-dessus, chaque cassette garde son individualité d'orientation vis-à-vis de la motricité commune à toutes les cassettes. En effet, les courroies 36 restent, de ce fait, dans des plans fixes parallèles dans leur partie qui est extérieure aux cassettes et qui coopère avec les éléments moteurs composés par le tambour moteur 39 et le ou les arbres de renvoi 44, 45..

Selon l'invention chacune des cassettes est pourvue de moyens 50 de réglage et de maintien de sa position angulaire par rapport au plan médian vertical 12 du dispositif 1. Préférentiellement, de tels moyens de réglage 50 sont constitués par un étrier 51 équipant la partie aval 18 de chacune des cassettes 13a, 13b ... et 14a, 14b ... et s'interposant entre les flasques latéraux 19, 20 de ces dernières. Ces étriers 51 viennent en prise avec une traverse 52 disposée parallèlement à la traverse 31 et qui, tout comme cette dernière, est rendue solidaire, à hauteur de ses extrémités, des côtés latéraux 33, 34, composant le châssis 35.

Ces moyens de réglage 50 sont, par ailleurs, complétés par des moyens de serrage 53, en vue d'immobiliser l'étrier 51 sur ladite traverse 52 et, finalement, dans le but de bloquer en rotation une cassette 13a, 13b ... et 14a, 14b ... Il convient de noter, à ce propos, que de tels moyens de serrage 53 peuvent être de type manuel et constitués, par exemple, par une vis à violon 54 telle que représentée dans les dessins. A noter, à ce propos, que de telles vis à violon 54, ou d'une manière générale, de vis à serrage manuel seront implantées, préférentiellement, en quinconce d'une cassette à la suivante sur les étriers 51 en vue de favoriser leur accessibilité. En outre, à la place de ces vis 54, on peut envisager le blocage de chaque étriers 51 par un système de levier à excentrique.

Toutefois, de tels moyens de serrage 53 peuvent, également, être de type automatique et, par exemple, pneumatique, ceci, plus particulièrement, lorsque la commande en rotation des cassettes 13a, 13b ... et 14a, 14b ... est elle-même motorisée. Cela permet, finalement, la prise en charge du fonctionnement et du réglage du dispositif 1 par un système à commande numérique.

Préférentiellement, le réglage de cette position angulaire des cassettes 13a, 13b ... et 14a, 14b ... par rapport au plan médian vertical 12, est facilité par l'implantation d'une butée médiane 55 sur la traverse 52 à hauteur de ce plan médian vertical 12. Par contre, dans le cas du choix d'un nombre impair de cassettes, il peut être substitué, à la butée médiane 55, la cassette centrale qui est, alors, bloquée à demeure dans ce plan médian vertical 12.

Selon l'invention, le châssis 35 du dispositif 1 est de type suspendu et réglable en hauteur selon une direction 56 perpendiculaire au plan de la planche de traitement 17. Ceci permet de moduler l'espacement 38a, 38b, respecté entre les brins actifs 37 des courroies 36 et ladite planche de traitement 17 en fonction de la taille des pâtons préallongés entiers 2 ou des portions de pâtons 3 à traiter. Plus précisément, les côtés latéraux 33, 34 que compose ce châssis 35 sont fixes, par l'intermédiaire de pattes de liaison 57, 58 et au moyen d'un dispositif de réglage quelconque, déterminable par l'Homme du Métier, au bâti support de l'installation qui, pour des raisons de commodité et de compréhension des dessins n'a pas été représenté sur ces derniers.

A noter, en outre, que cet espacement respecté entre les brins actifs 37 des courroies 36 et ladite planche de traitement 17 est variable sur la longueur de cette dernière. Plus précisément, l'espacement 38a que l'on distingue à hauteur de la partie amont 59a de ladite planche de traitement 17 est choisie légèrement plus grand qu'au niveau de la partie aval 59b de cette dernière et donc en sortie du dispositif 1, ceci de manière à tenir compte de l'amincissement subi par les pâtons préallongés entiers 2 ou portions de pâtons 3 au-fur-et-à mesure qu'ils s'étirent en traversant le dispositif 1.

On distingue, en outre, sur les dessins et, plus particulièrement, dans la figure 1, une inclinaison générale du dispositif 1 ceci dans le sens descendant depuis sa partie amont 4 jusqu'à sa partie aval 6. Cette disposition a pour but de favoriser, d'une part, l'entrée des pâtons préallongés entiers 2 ou portions de pâtons 3 dans ce dispositif 1 et, d'autre part, la retombée des pâtons 8 ou portions de pâtons 9 traités sur le convoyeur d'évacuation 7 que surplombe l'extrémité aval 59b de la planche de traitement 17.

Le dispositif conforme à l'invention fonctionne, par conséquent, de la manière suivante :
1 - Ainsi, dans le cas de la fabrication de pains longs, cas auquel s'apparente, notamment, la figure 2, l'on procède, dans un premier temps, au réglage de l'espacement 38a, 38b, défini entre les brins actifs 37 des courroies toriques 36 et la planche de traitement 17, en intervenant sur les moyens de liaison réglables reliant les côtés latéraux 33, 34 du châssis 35 à un bâti support quelconque. Bien entendu, ce réglage de cet espacement s'opère en fonction du diamètre du pâton préallongé entier 2 provenant de la façonneuse et acheminé au travers du convoyeur d'amenée 5.
   Puis l'on procède au réglage de la longueur finale 60 que doit atteindre le pâton traité 8 en sortie du dispositif 1, ceci en procédant au serrage, sur la traverse 52, à une côte égale à la moitié de la longueur 60 et partant de la butée médiane 55, des étriers 51 correspondant aux cassettes extrêmes 13a et 14a.
   Finalement, l'on repartit, régulièrement, les autres cassettes 13b, 13c ... et 14b, 14c ... de chacune des séries 13, 14, entre les cassettes extrêmes 13a et 14a et ladite butée médiane 55 en respectant un écartement 61 constant entre ces cassettes 13a, 13b ... et 14a, 14b ... à hauteur de leur partie aval 18. Ces cassettes 13a, 13b ... et 14a, 14b, sont, alors immobilisées dans cette position au travers des moyens de serrage 53 constitués, dans le cadre du mode de réalisation illustré dans les dessins, par des vis à violon 54.
   Le dispositif est ainsi prêt à fonctionner. Par conséquent, ces pâtons préallongés entiers 2 peuvent être projetés, par le convoyeur d'amenée 5, sur la planche de traitement 17 où ils sont pris en charge par le dispositif 1 sous l'action de la rotation des courroies toriques 36 dans le sens indiqué par la flèche 62. Ces pâtons préallongés entiers 2 s'insèrent entre les brins actifs 37 de ces courroies toriques 36 et ladite planche de traitement 17, tout en roulant sur eux mêmes dans le sens de rotation repéré par la flèche 63. En fait, pendant cette phase de traitement chaque troncon 64 de pâtons préallongés entiers 2, s'étendant, en amont 4 de ce dispositif 1, entre les axes de rotation 16 de deux cassettes 13a, 13b ... ou 14a, 14b ... successives, va subir une élongation afin d'atteindre, finalement, la longueur correspondant à l'écartement 61 de ces cassettes 13a, 13b ... et 14a, 14b ... à hauteur de leur partie aval 18.
   En assurant, ainsi, un étirage identique sur toute la longueur du pâton préallongé entier 2, il est possible, partant d'un pâton préallongé parfaitement cylindrique, d'aboutir à un pâton traité 8 également cylindrique sur sa longueur.
   Par contre, si l'on part d'un pâton préallongé entier plus gros en son milieu qu'à ses extrémités, ceci est le cas pour les pâtons préallongés sortant de certains types de façonneuses, et que l'on désire aboutir à un pâton étiré 8 de forme cylindrique, il suffit de disposer les cassettes 13a, 13b ... et 14a, 14b ..., de chacune des séries 13, 14 de telle manière à ménager une divergence plus grande entre les cassettes proches du plan médian vertical 12 et, au contraire, de diminuer l'écartement 61 des cassettes venant à traiter les extrémités du pâton 2.
   Bien entendu, dans le cas inverse, c'est-à-dire si l'on part d'un pâton préallongé entier 2 parfaitement cylindrique et qu'on veut obtenir un pâton traité 8 plus gros en son milieu qu'à ses extrémités, il convient de procéder à un réglage inverse à celui mentionné ci-dessus. C'est-à-dire qu'il y a lieu de maintenir un écartement moindre au niveau de l'extrémité avale 18 des cassettes se situant proches du plan médian vertical 12 et d'assurer une divergence plus grande entre ces cassettes agissant sur les extrémités du pâton préallongé entier 2.
2 - L'on se réfère, à présent, à la situation illustrée dans la figure 3 correspondant au cas où l'on est en présence de portions de pâtons (repérées 3a à 3f) délivrées par une façonneuse-découpeuse.
   En fait, il s'agit, dans ce cas, d'assurer, simplement, un écartement de ces portions de pâtons 3a à 3f de manière à augmenter, substantiellement, la distance les séparant, initialement, en vue d'autoriser les traitements ultérieurs, ceci sans augmenter leur longueur 66 qui est considérée comme suffisante. Il convient de préciser, à ce propos, qu'au cours de ces traitements auxquels on procède ultérieurement, tel que la fermentation finale ou la cuisson, les portions de pâtons 9 vont augmenter en volume et il est nécessaire de faire en sorte qu'elle ne s'accolent pas les unes aux autres de manière, précisément, à garantir leur parfaite cuisson à hauteur de leurs extrémités.
   Ainsi, dans une telle situation et après avoir procédé au réglage de l'espacement 38a, 38b, respecté entre le brin actif 37 des courroies 36 et la planche de traitement 17, l'on vient à accoler les cassettes en forme de groupes 67a à 67f dont la largeur est sensiblement égale à la longueur 66 des portions de pâtons 3a à 3f et dont le nombre est équivalent à celui de ces dernières.
   Ainsi, en présence de trente cassettes au total pour le traitement de six portions de pâtons 3a à 3f l'on fait des groupes 67a à 67f de cinq cassettes, puis l'on répartit ces groupes de cassettes 67a, 67f en écartant, initialement, les deux groupes 67c et 67d, proches du plan médian vertical 12 et à hauteur de leur extrémité aval, d'une distance 65 correspondant, sensiblement à la distance que doivent respecter les portions de pâtons 3a à 3f après avoir été traitées.
   Bien entendu, la longueur 66 de ces portions de pâtons 3a à 3f est respectée au passage du dispositif 1 en s'assurant que les cassettes composant un groupe 67a à 67f sont maintenues jointives les unes par rapport aux autres.
   Par ailleurs et après le positionnement des deux groupes 67c et 67d centraux, l'on vient à positionner les autres groupes de cassettes 67a, 67b, 67e et 67f en veillant à préserver, systématiquement, entre ces groupes, cette même distance 65.
   Ainsi lors de la mise en route du dispositif, les portions de pâtons prédécoupés 3a à 3g, en provenance du convoyeur d'amenée 5, sont déversées sur la planche de traitement 17 et chacune de ces portions de pâtons 3a à 3f est prise en charge par les brins actifs 37 des courroies 36 d'un groupe de cassettes 67a à 67f. Finalement et sous l'influence desdites courroies 36 et de leurs brins actifs 37, les portions de pâtons traitées 9a à 9f, en aval 6 du dispositif 1 et sur le convoyeur d'évacuation 7, respectent, entre eux, une distance 65 correspondant à l'écartement désiré.
3 - Un troisième cas de figure que l'on rencontre est celui de la fabrication de pains que l'on pourrait qualifier de semi-longs, par exemple, de demi-baguettes et de tiers de baguettes. Dans ce cas, il s'agit, partant d'un pâton préallongé coupé en deux ou trois portions, repérées 3g, 3h, 3i en figure 4, non seulement d'écarter ces portions, mais, en outre, de les étirer, leur longueur 68 initiale étant considérée comme insuffisante.

Ainsi et si l'on prend le cas, tel que représenté dans cette figure 4, d'un pâton préallongé, découpé en trois portions 3g, 3h, 3i qu'il convient d'écarter et d'étirer, l'on vient, initialement, à former trois groupes de cassettes 67g, 67h, 67i identiques, c'est-à-dire comportant un même nombre de cassettes. Puis l'on commence par régler la divergence des cassettes correspondant au groupe central 67h, ceci en gardant la symétrie par rapport au plan médian vertical 12. Bien entendu, cette divergence des cassettes composant le groupe central 67h doit être déterminée de telle sorte que l'on obtienne une portion de pâtons 9h dont la longueur finale 69 soit celle désirée. Enfin l'on procède au réglage des deux autres groupes de cassettes 67g et 67i en préservant entre ces derniers et le groupe de cassettes central 67h, au niveau de leur extrémité aval, une distance 70 correspondant, précisément, à l'écartement qu'il convient d'obtenir au niveau des portions de pâtons 9g, 9h et 9i après traitement au travers du dispositif 1.

Bien entendu, le maintien et le réglage de la position d'une cassette s'obtient, systématiquement, en intervenant sur les moyens de réglage 50 que constitue l'étrier 51 et les moyens de serrage 53.

Tel que ceci apparaît sur les dessins joints en annexe, il est nécessaire que la largeur, formée par l'ensemble des cassettes, respectivement, par les groupes de cassettes, à hauteur de leur extrémité amont, correspond, au moins, à la longueur des pâtons préallongés entiers 2, respectivement, des portions de pâtons 3 de sorte que la prise en charge, par l'intermédiaire du brin actif 37 des courroies 36, de ces pâtons préallongés entiers 2 ou de ces portions de pâtons 3, s'effectue sur toute la longueur de ces derniers. Ceci permet de garantir une régularité dans le traitement assuré au travers du dispositif 1.

Ainsi, l'on pourra disposer d'un nombre de cassettes largement supérieur au cas illustré dans les figures si cela s'avère nécessaire. Ceci d'autant plus que certaines de ces cassettes peuvent être neutralisées, par exemple, en écartant, hors du champ d'action, les cassettes extrêmes si les pâtons préallongés entiers 2 sont moins longs que la largeur totale représentée par ces cassettes à hauteur de leur partie amont 15.

On peut également neutraliser des cassettes intermédiaires au milieu d'un écartement entre des portions de pâtons 3. Cela est, par exemple, le cas quand, avec trente cassettes, on veut fabriquer des quarts de baguettes en les écartant. Dans ce cas, on règle le dispositif en faisant quatre groupes de sept cassettes, les deux cassettes restantes peuvent, alors, être placées l'une au milieu de l'écartement entre la première et la deuxième portion de pâtons et l'autre entre la troisième et la quatrième portion de pâtons.

A noter, que, dans cette situation, l'on peut, en outre, envisager de diminuer la longueur totale formée par les portions de pâton prédécoupés, puis de neutraliser les deux cassettes extrêmes.

En conclusion, l'on observe que le dispositif 1, au travers d'un simple réglage des cassettes qui le composent, permet son adaptation à de nombreux types de produits. A noter, en outre, que le réglage de ces cassettes peut être considérablement facilité par l'emploi de gabarits, sous forme de râteaux correspondant, chaque fois, à un type de produit et dont les dents viennent à définir l'écartement à respecter entre deux cassettes successives ou entre deux groupes de cassettes.

Au vu de ce qui précède, l'on comprend que ce dispositif, conforme à l'invention, est parfaitement polyvalent et d'une commodité d'utilisation sans comparaison possible avec les dispositifs antérieurs dont on connaît la rigidité de fonctionnement et le coût. Aussi, la présente invention apporte, une solution, non seulement sur le plan technologique mais aussi économique.

## Revendications

1. Dispositif polyvalent pour étirer ou écarter ou, simultanément, écarter et étirer selon le cas, des pâtons préallongés entiers (2) ou découpés en portions (3) et provenant d'une façonneuse-découpeuse en vue de la fabrication industrielle de pains longs ou petits pains longs, le dispositif polyvalent comportant, de part et d'autre de son plan médian vertical (12), une série (13, 14) de cassettes (13a, 13b ..., 14a, 14b ..) disposées dans des plans verticaux et montées articulées, dans leur partie amont (15), autour d'un axe (16) sensiblement perpendiculaire au plan formé par une planche de traitement (17) sur laquelle sont amenés à évoluer les pâtons préallongés entiers (2) ou les portions de pâton (3), ces cassettes (13a, 13b ..., 14a, 14b ...) intégrant, chacune, des poulies de renvoi (24, 25, 26), à axe de rotation (21, 22, 23) horizontal, autour desquelles s'enroule, partiellement, une courroie torique (36) de manière à définir un brin actif (37) respectant avec ladite planche de traitement (17) un espacement (38a, 38b), cette courroie torique (36) venant à boucler son circuit extérieurement à la cassette (13a, 13b ..., 14a, 14b ...) en s'enroulant, partiellement, au moins autour d'un tambour moteur (39) disposé perpendiculairement audit plan médian vertical (12).

2. Dispositif selon la revendication 1, caractérisé par le fait que les cassettes (13a, 13b ..., 14a, 14b ...) sont constituées par deux flasques latéraux (19, 20) entretoisés, notamment, par les axes (21, 22, 23) sur lesquels sont montées pivotantes les poulies de renvoi (24, 25, 26), ainsi que par une chape d'articulation (27) se situant dans la partie amont (15) de ces cassettes (13a, 13b ..., 14a, 14b ...), cette chape d'articulation (27) étant montée en rotation sur les extrémités (28, 29) d'un pivot (30) se présentant saillant de part et d'autre d'une traverse (31) laquelle est disposée perpendiculairement audit plan médian vertical (12) et surplombe la planche de traitement (17).

3. Dispositif selon les revendications 1 et 2, caractérisé par le fait que les pivots (30), sur lesquels sont montées en rotation les chapes d'articulation (27) correspondant aux cassettes (13a, 13b ..., 14a, 14b ...), se situent sur l'axe de rotation (16) de ces dernières et sont implantés au niveau de la traverse (31) en respectant, entre eux, un écart d'une côte (32) réduite au minimum pour maintenir quasiment jointives lesdites cassettes (13a, 13b ..., 14a, 14b ...) dans leur partie amont (15) tout en leur permettant de tourner autour de leur axe (16).

4. Dispositif selon la revendication 1, caractérisé par le fait que :
a) deux (25, 26) des poulies d'une cassette (13a, 13b ..., 14a, 14b ...) sont placées dans la partie amont (15) de cette dernière de telle sorte que leur diamètre primitif (42, 43) soit tangent à l'axe de rotation (16) ;
b) le tambour moteur (39) et un arbre de renvoi (44) ou deux arbres de renvoi (44, 45), intervenant dans le circuit extérieur parcouru par les courroies toriques (36), sont, également, disposés de sorte que leur diamètre primitif (46, 47) soit tangent à l'axe de rotation (16) de ces cassettes (13a, 13b ..., 14a, 14b ...) ;
c) la disposition de ce tambour moteur (39) et du ou des arbres de renvoi (44, 45) est, en outre, choisie, de manière que lesdites courroies toriques (36) viennent à définir, au moment de quitter, respectivement, d'entrer en contact avec les poulies de renvoi (25, 26), un brin (48, 49) d'axe confondu avec l'axe de rotation (16) d'une cassette (13a, 13b ..., 14a, 14b ...) ;
pour faire intervenir la souplesse en rotation des courroies toriques (36) lors du pivotement desdites cassettes (13a, 13b ..., 14a, 14b ...) autour de leur axe (16).

5. Dispositif selon la revendication 1, caractérisé par le fait que chacune des cassettes (13a, 13b ..., 14a, 14b ...) d'une série (13, 14) est pourvue de moyens (50) de maintien et de réglage de sa position angulaire par rapport au plan médian vertical (12) du dispositif (1).

6. Dispositif selon la revendication 5, caractérisé par le fait que les moyens (50) sont constitués, d'une part, par un étrier (51) équipant la partie aval (18) de chacune des cassettes (13a, 13b ..., 14a, 14b ...) et s'interposant entre les flasques latéraux (19, 20) de ces dernières, ces étriers (51) venant en prise avec une traverse (52) disposée parallèlement à la traverse (31) comportant les pivots (30) et, d'autre part, par des moyens de serrage (53) manuels ou automatiques en vue d'immobiliser l'étrier (51) sur ladite traverse (52) et pour bloquer en rotation les cassettes (13a, 13b ..., 14a, 14b ...).

7. Dispositif selon les revendications 3 et 6, caractérisé par le fait que les traverses (31) et (52) sont disposées perpendiculairement au plan médian vertical (12) du dispositif (1) et rendues solidaires, au niveau de leurs extrémités, de deux côtés latéraux (33, 34) venant à composer un châssis (35) fixé par l'intermédiaire de pattes de liaison (57, 58) et au moyen d'un dispositif de réglage à un bâti support pour autoriser le réglage en hauteur dudit châssis (35) selon une direction (56) perpendiculaire au plan de la planche de traitement (17) en vue de moduler l'espacement (38a, 38b) respecté entre les brins actifs (37) des courroies toriques (36) et cette planche de traitement (17).

8. Dispositif selon la revendication 7, caractérisé par le fait que l'espacement (38a) respecté entre les brins actifs (37) des courroies toriques (36) par rapport à la planche de traitement (17), à hauteur de la partie amont (59a) de cette dernière, est choisi légèrement plus grand que l'espacement (38b) respecté au niveau de la partie aval (59b) de cette dernière et, donc, en sortie du dispositif (1), pour tenir compte de l'amincissement subi par les pâtons préallongés entiers (2) ou les portions de pâtons (3) au fur et à mesure qu'ils s'étirent en traversant le dispositif (1).

9. Dispositif selon la revendication 2, caractérisé par le fait qu'entre les flasques latéraux (19, 20) d'une cassette (13a, 13b ..., 14a, 14b ...) est implantée une barrette (37a) s'étendant sur toute la longueur séparant les poulies de renvoi (24) et (26) et sur la face inférieure de laquelle s'appuie le brin actif (37) de la courroie torique (36) pour préserver sa linéarité.

10. Dispositif selon la revendication 1 caractérisé par le fait qu'il est incliné dans le sens descendant depuis sa partie amont (4) jusqu'à sa partie aval (6) pour favoriser l'entrée des pâtons préallongés entiers (2) ou portions de pâtons (3) dans ce dispositif (1) et pour faciliter la retombée des pâtons (8) ou portions de pâtons (9) traitées sur un convoyeur d'évacuation (7) que surplombe l'extrémité aval (59b) de la planche de traitement (17).

11. Dispositif selon la revendication 1 caractérisé par le fait que :
a) pour la fabrication de pains longs partant de pâtons préallongés entiers (2), la largeur formée par l'ensemble des cassettes (13a, 13b ..., 14a, 14b ...) à hauteur de leur partie amont (15), correspond au moins à la longueur des pâtons préallongés entiers (2) ;
b) pour la fabrication de petits pains longs, partant de portions de pâtons prédécoupés (3), les cassettes (13a, 13b ..., 14a, 14b ...) sont disposées en forme de groupes (67a à 67i) dont la largeur, à hauteur de leur extrémité amont, correspond au moins à la longueur des portions de pâtons (3) ;
c) pour assurer une fonction d'étirage de pâtons préallongés entiers (2) ou de portions de pâtons (3), les cassettes (13a, 13b ..., 14a, 14b ...) soit des deux séries (13, 14), soit d'un groupe de cassettes (67a à 67i), sont disposées de manière divergente les unes par rapport aux autres ;
d) pour écarter des portions de pâtons (3), les cassettes (13a, 13b ..., 14a, 14b ...) sont disposées en groupes (67a à 67f) de manière accolée les unes aux autres pour conserver la longueur initiale des portions de pâtons (3) après les avoir écartées par l'intermédiaire du dispositif (1).

12. Dispositif selon la revendication 6, caractérisé par le fait que dans le plan médian vertical (12) et sur la traverse (52) est disposée une butée médiane (55) pour faciliter le réglage et le positionnement angulaire d'une cassette (13a, 13b ..., 14a, 14b ...) par rapport audit plan médian vertical (12).

13. Dispositif selon la revendication 1, caractérisé par le fait que dans le cadre d'un nombre de cassettes (13a, 13b ..., 14a, 14b ...) impair, la cassette centrale est bloquée à demeure dans le plan médian vertical (12) du dispositif (1).

14. Dispositif selon la revendication 1 caractérisé par le fait que pour le réglage du positionnement angulaire des cassettes (13a, 13b ..., 14a, 14b ...) par rapport au plan médian vertical (12), il est employé des gabarits sous forme de râteaux dont les dents viennent à définir l'écartement respecté entre deux cassettes successives ou entre deux groupes de cassettes, à hauteur de leur extrémité aval.

## Claims

1. Multiple-purpose device for stretching and/or spreading or simultaneously spreading and stretching, as the case may be, of entire pre-elongated bread dough pieces (2), or bread dough pieces cut into portions (3), proceeding from a shaping-cutting machine, with a view to the industrial manufacture of elongated loaves or elongated rolls of bread, the multiple-purpose device including, on both sides of its vertical median plane (12), a series (13, 14) of cassettes (13a, 13b ..., 14a, 14b ...) arranged in vertical planes and hingedly mounted, at their upstream portion (15), about an axis (16) substantially perpendicular to the plane formed by a processing board (17) on which move the entire pre-elongated bread dough pieces (2) or the portions of bread dough pieces (3), these cassettes (13a, 13b ..., 14a, 14b ...) each having integrated guide pulleys (24, 25, 26) with a horizontal axis of rotation (21, 22, 23) about which partially winds up a toric belt (36) so as to define an active side (37) keeping a distance (38a, 38b) with respect to said processing board (17), this toric belt (36) closing its lap outside the cassette (13a, 13b ..., 14a, 14b...) by partially winding up about at least a driving drum (39) arranged perpendicularly to said vertical median plane (12).

2. Device according to claim 1, characterized in that the cassettes (13a, 13b ..., 14a, 14b ...) are comprised of two lateral side plates (19, 20) spaced apart viz. by the axes (21, 22, 23) onto which are pivotingly mounted the guide pulleys (24, 25, 26) as well as a hinging cover (27) located in the upstream portion (15) of these cassettes (13a, 13b ..., 14a, 14b ...), this hinging cover (27) being rotatingly mounted onto the ends (28, 29) of a pivot (30) protruding on both sides of a cross bar (31) which is arranged perpendicularly to said vertical median plane (12) and projecting over the processing board (17).

3. Device according to claims 1 and 2, characterized in that the pivots (30) onto which are rotatingly mounted the hinging covers (27) corresponding to the cassettes (13a, 13b ..., 14a, 14b ...) are located on the axis of rotation (16) of these latter and are installed at the level of the cross bar (31) maintaining between each other a distance the size (32) of which is reduced to a minimum in order to maintain said cassettes (13a, 13b ..., 14a, 14b ...) nearly jointed in their upstream portion (15) while allowing same to rotate about their axis (16).

4. Device according to claim 1, characterized in that:
a) two (25, 26) of the pulleys of a cassette (13a, 13b ..., 14a, 14b ...) are installed in the upstream portion (15) of same so that their pitch diameter (42, 43) be tangent to the axis of rotation (16),
b) the driving drum (39) and a counter-shaft (44) or two counter-shafts (44, 45) intervening in the external lap covered by the toric belts (36) are also arranged so that their pitch diameter (46, 47) be tangent to the axis of rotation (16) of these cassettes (13a, 13b ..., 14a, 14b ...),
c) the arrangement of this driving drum (39) and the counter-shaft or counter-shafts (44, 45) is, in addition, so selected that said toric belts (36) define, when getting out of, respectively entering into contact with the guide pulleys (25, 26), a side (48, 49) with an axis coinciding with the axis of rotation (16) of a cassette (13a, 13b ..., 14a, 14b ...),
in order to cause the flexibility in rotation of the toric belts (36) to intervene during the pivoting of said cassettes (13a, 13b ..., 14a, 14b ...) about their axis (16).

5. Device according to claim 1, characterized in that each of the cassettes (13a, 13b ..., 14a, 14b ...) of a series (13, 14) is provided with means (50) for maintaining and adjusting its angular position with respect to the vertical median plane (12) of the device (1).

6. Device according to claim 5, characterized in that the means (50) are comprised of, on the one hand, a strap (51) the downstream portion (18) of each cassette (13a, 13b ..., 14a, 14b ...) is fitted with and interposing between the lateral side plates (19, 20) of same, these straps (51) engaging with a cross bar (52) arranged parallelly to the cross bar (31) including the pivots (30) and, on the other hand, manual or automatic clamping means (53), with a view to immobilize the strap (51) on said cross bar (52) and to lock the cassettes (13a, 13b ..., 14a, 14b ...) in rotation.

7. Device according to claims 3 and 6, characterized in that the cross bars (31) and (52) are arranged perpendicularly to the vertical median plane (12) of the device (1) and made integral, at the level of their ends, with two lateral sides (33, 34) forming a frame (35) secured, through connecting feet (57, 58) and by means of an adjusting device, to a bearing frame in order to authorize the height adjustment of said frame (35) in a direction (56) perpendicular to the plane of the processing board (17) with a view to modulate the distance (38a, 38b) maintained between the active sides (37) of the toric belts (36) and this processing board (17).

8. Device according to claim 7, characterized in that the distance (38a) maintained between the active sides (37) of the toric belts (36) with respect to the processing board (17), at the level of the upstream portion (59a) of this latter, is chosen slightly larger than the distance (38b) maintained at the level of the downstream portion (59b) of same and thus at the exit of the device (1), in order to take into consideration the thinning down undergone by the entire pre-elongated bread dough pieces (2) or the portions of bread dough pieces (3) as they are stretched while passing through the device (1).

9. Device according to claim 2, characterized in that between the lateral side plates (19, 20) of a cassette (13a, 13b ..., 14a, 14b ...) is installed a small bar (37a) extending over the full length separating the guide pulleys (24) and (26) and on the lower face of which rests the active side (37) of the toric belt (36) in order to preserve its linearity.

10. Device according to claim 1, characterized in that it is inclined in the direction descending from its upstream portion (4) to its downstream portion (6) in order to promote the entering of the entire pre-elongated bread dough pieces (2) or the portions of bread dough pieces (3) into this device (1) and to facilitate the falling down of the processed bread dough pieces (8) or portions of bread dough pieces (9) onto a feed-out conveyer (7) which projects over the downstream end (59b) of the processing board (17).

11. Device according to claim 1, characterized in that:
a) for the manufacture of elongated loaves of bread from entire pre-elongated bread dough pieces (2), the width formed by the aggregate cassettes (13a, 13b ..., 14a, 14b ...) at the level of their downstream portion (15) corresponds at least to the length of the entire pre-elongated bread dough pieces (2),
b) for the manufacture of elongated rolls from portions of pre-cut bread dough pieces (3), the cassettes (13a, 13b ..., 14a, 14b ...) are arranged in the form of groups (67a to 67i) the width of which, at the level of their upstream end, corresponds at least to the length of the portions of bread dough pieces (3),
c) in order to ensure a function of stretching of entire pre-elongated bread dough pieces (2) or portions of bread dough pieces (3), the cassettes (13a, 13b ..., 14a, 14b ...) of either two series (13, 14) or a group of cassettes (67a to 67i) are arranged diverging from each other,
d) in order to separate the portions of bread dough pieces (3), the cassettes (13a, 13b ..., 14a, 14b ...) are arranged in groups (67a to 67f), joined to each other, in order to maintain the initial length of the portions of bread dough pieces (3) after having separated same through the device (1).

12. Device according to claim 6, characterized in that in the vertical median plane (12) and on the cross bar (52) is arranged a median thrust (55) in order to facilitate the adjustment and the angular positioning of a cassette (13a, 13b ..., 14a, 14b ...) with respect to said vertical median plane (12).

13. Device according to claim 1, characterized in that within the framework of an odd number of cassettes (13a, 13b ..., 14a, 14b ...), the central cassette is unmovably locked in the vertical median plane (12) of the device (1).

14. Device according to claim 1, characterized in that for adjusting the angular positioning of the cassettes (13a, 13b ..., 14a, 14b ...) with respect to the vertical median plane (12), gauges in the shape of rakes are used the teeth of which define the distance maintained between two consequent cassettes or between two groups of cassettes, at the level of their downstream end.

## Patentansprüche

1. Mehrzweckvorrichtung zum Strecken und/oder Entfernen oder zum gleichzeitgen Entfernen und Strecken, je nach dem Fall, von ganzen vorlanggezogenen Brotteigstücken (2), oder in Teile geschittenen Brotteigstücken (3), die von einer Form- und Schneidemaschine kommen, zwecks der industriellen Fertigung von Langbroten oder Langbrötchen, wobei die Mehrzweckvorrichtung an beiden Seiten ihrer senkrechten Mittelebene (12) eine Reihe (13, 14) von Kassetten (13a, 13b ..., 14a, 14b ...) umfaßt, die in senkrechten Ebenen angeordnet und an deren stromaufwärtsen Teil (15) um eine Achse (16) gelenkt gelagert sind, die im wesentlichen senkrecht zu einer Ebene ist, die von einem Verarbeitungsbrett (17) gebildet ist, auf dem die ganzen vorlanggezogenen Brotteigstücke (2) oder die Brotteigstückteile (3) hin und her bewegen, wobei diese Kassetten (13a, 13b ..., 14a, 14b ...) je Umkehrrollen (24, 25, 26) mit waagerechter Drehachse (21, 22, 23) integrieren, um die sich ein ringförmiger Riemen (36) zum Teil so aufrollt, daß er einen aktiven Trum (37) definiert, der einen Abstand (38a, 38b) bezüglich des genannten Verarbeitungsbretts (17) hält, wobei dieser ringförmige Riemen (36) seinen Kreislauf außerhalb der Kassette (13a, 13b ..., 14a, 14b ...) schließt, indem er sich zum Teil um mindestens eine Antriebstrommel (39) aufrollt, die senkrecht zur genannten senkrechten Mittelebene (12) angeordnet ist.

2. Vorrichtung nach Anspruch 1, dadurch gekennzeichnet, daß die Kassetten (13a, 13b ..., 14a, 14b ...) aus zwei seitlichen Seitenplatten (19, 20), die nämlich durch die Achsen (21, 22, 23), um die die Umkehrrollen (24, 25, 26) schwenkbar gelagert sind, beabstandet sind, sowie einem Gelenkdeckel (27), der sich im stromaufwärtsen Teil (15) dieser Kassetten (13a, 13b ..., 14a, 14b ...) befindet, bestehen, wobei dieser Gelenkdeckel (27) um die Enden (28, 29) eines Zapfens (30) drehend gelagert ist, der an beiden Seiten eines Querträgers (31) herausragt, der senkrecht zur genannten senkrechten Mittelebene (12) angeordnet ist und über das Verarbeitungsbrett (17) hängt.

3. Vorrichtung nach Ansprüchen 1 und 2, dadurch gekennzeichnet, daß sich die Zapfen (30), um die die den Kassetten (13a, 13b ..., 14a, 14b ...) entsprechenden Gelenkdeckel (27) drehend gelagert sind, auf der Drehachse (16) dieser letzten befinden und im Bereich des Querträgers (31) angebracht sind, wobei sie zwischen einander einen Abstand halten, dessen Größe (32) auf ein Minimum beschränkt ist, um die genannten Kassetten (13a, 13b ..., 14a, 14b ...) an deren stromaufwärtsen Teil (15) fast aneinanderstoßend zu halten, während es denselben erlaubt wird, um deren Achse (16) zu drehen.

4. Vorrichtung nach Anspruch 1, dadurch gekennzeichnet, daß:
a) zwei (25, 26) der Rollen einer Kassette (13a, 13b ..., 14a, 14b ...) im stromaufwärtsen Teil (15) dieser letzten so angeordnet sind, daß deren Flankendurchmesser (42, 43) die Drehachse (16) berührt,
b) die Antriebstrommel (39) und eine Umkehrwelle (44) oder zwei Umkehrwellen (44, 45), die im von den ringförmigen Riemen (36) gelaufenen Außenkreislauf eingreifen, sind ebenfalls so angeordnet, daß deren Flankendurchmesser (46, 47) die Drehachse (16) dieser Kassetten (13a, 13b ..., 14a, 14b ...) berührt,
c) die Anordnung dieser Antriebstrommel (39) und der Umkehrwelle oder Umkehrwellen (44, 45) außerdem so gewählt ist, daß die genannten ringförmigen Riemen (36), wenn sie außer, bzw. in Berührung mit den Umkehrrollen (25, 26) kommen, einen Trum (48, 49), dessen Achse der Drehachse (16) einer Kassette (13a, 13b ..., 14a, 14b ...) entspricht, bestimmen, um die Drehflexibilität der ringförmigen Riemen (36) während dem Schwenken der genannten Kassetten (13a, 13b ..., 14a, 14b ...) um deren Achse (16) auftreten zu lassen.

5. Vorrichtung nach Anspruch 1, dadurch gekennzeichnet, daß jede der Kassetten (13a, 13b ..., 14a, 14b ...) einer Reihe (13, 14) mit Mitteln (50) zum Erhalten und Regeln deren Winkelposition bezüglich der senkrechten Mittelebene (12) der Vorrichtung (1) versehen ist.

6. Vorrichtung nach Anspruch 5, dadurch gekennzeichnet, daß die Mittel (50) aus, einerseits, einem Bügel (51), mit dem der stromabwärtse Teil (18) jeder Kassette (13a, 13b ..., 14a, 14b ...) versehen ist und der sich zwischen den seitlichen Seitenplatten (19, 20) derselben fügt, wobei diese Bügel (51) mit einem Querträger (52), der parallel zum Querträger (31), der die Zapfen (30) umfaßt, angeordnet ist, im Eingriff kommen, und, andererseits, handbetätigten oder automatischen Spannmittel, zwecks der Festsetzung des Bügels (51) auf dem genannten Querträger (52) und der Sperrung in Drehung der Kassetten (13a, 13b ..., 14a, 14b ...), bestehen.

7. Vorrichtung nach Ansprüchen 3 und 6, dadurch gekennzeichnet, daß die Querträger (31) und (52) senkrecht zur senkrechten Mittelebene (12) der Vorrichtung (1) angeordnet und im Bereich deren Enden fest mit zwei Seitenkanten (33, 34) verbunden sind, die einen Rahmen (35) bilden, der über Verbindungsfüßchen (57, 58) und mittels einer Einstellvorrichtung an einem Tragrahmen befestigt ist, um die Höheneinstellung des genannten Rahmens (35) in einer zur Ebene des Verarbeitungsbretts (17) senkrechten Richtung (56) zu ermöglichen, zwecks einer Modulation des zwischen den aktiven Trumen (37) der ringförmigen Riemen (36) und diesem Verarbeitungsbrett (17) erhaltenen Abstands (38a, 38b).

8. Vorrichtung nach Anspruch 7, dadurch gekennzeichnet, daß der zwischen den aktiven Trumen (37) der ringförmigen Riemen (36) bezüglich des Verarbeitungsbretts (17) erhaltene Abstand (38a), im Bereich des stromaufwärtsen Teils (59a) dieses letzten, gerinfügig größer als der im Bereich des stromabwärtsen Teils (59b) dieses letzten und somit am Ausgang der Vorrichtung (1) gewählt ist, um die Verdünnung der ganzen vorlanggezogenen Brotteigstücken (2) oder der Brotteigstückteile (3) nach Maßgabe deren Streckung während dem Durchgang durch die Vorrichtung (1) zu berücksichtigen.

9. Vorrichtung nach Anspruch 2, dadurch gekennzeichnet, daß zwischen den seitlichen Seitenplatten (19, 20) einer Kassette (13a, 13b ..., 14a, 14b ...) ein Stäbchen (37a) angebracht ist, das sich über die ganze Länge zwischen den Umkehrrollen (24) und (26) erstreckt und an dessen Unterfläche der aktive Trum (37) des ringförmigen Riemens (36) anlehnt, um dessen Linearität aufrechtzuerhalten.

10. Vorrichtung nach Anspruch 1, dadurch gekennzeichnet, daß sie in der von deren stromaufwärtsen Teil (4) zu deren stromabwärtsen Teil (6) hin geneigt ist, um die Hineinführung der ganzen vorlanggezogenen Brotteigstücken (2) oder der Brotteigstückteile (3) in diese Vorrichtung (1) zu befördern und das Niederfallen der verarbeiteten Brotteigstücken (8) oder Brotteigstuckteile (9) auf einen Abförderer (7), der über das stromabwärtse Ende (59b) des Verarbeitungsbretts (17) hängt, zu erleichtern.

11. Vorrichtung nach Anspruch 1, dadurch gekennzeichnet, daß:
a) die von den sämtlichen Kassetten (13a, 13b ..., 14a, 14b ...) im Bereich deren stromaufwärtsen Teils (15) gebildete Breite zur Fertigung von Langbroten ab ganzen vorlanggezogenen Brotteigstücken (2) der Breite der ganzen vorlanggezogenen Brotteigstücken (2) entspricht,
b) die Kassetten (13a, 13b ..., 14a, 14b ...) zur Fertigung von Langbrötchen ab vorgeschnittenen Brotteigstückteilen (3) in der Form von Gruppen (67a bis 67i) angeordnet sind, deren Breite im Bereich deren stromaufwärtsen Endes mindestens der Länge der Brotteigstückteile (3) entspricht,
c) die Kassetten (13a, 13b ..., 14a, 14b ...) zum Sichern einer Funktion der Streckung von ganzen vorlanggezogenen Brotteigstücken (2) oder Brotteigstückteilen (3) von entweder zwei Reihen (13, 14) oder einer Gruppe von Kassetten (67a bis 67i) auseinanderlaufend angeordnet sind,
d) die Kassetten (13a, 13b ..., 14a, 14b ...) zum Beabstanden der Brotteigstückteile (3) in Gruppen (67a bis 67f) aneinaderstoßend angeordnet sind, um die Anfangslänge der Brotteigstückteile (3) zu erhalten, nachdem sie durch die Vorrichtung (1) beabstandet worden sind.

12. Vorrichtung nach Anspruch 6, dadurch gekennzeichnet, daß in der senkrechten Mittelebene (12) und auf dem Querträger (52) ein Mittelanschlag (55) angeordnet ist, um die Regelung und die Winkelpositionierung einer Kassette (13a, 13b ..., 14a, 14b ...) bezüglich der genannten senkrechten Mittelebene (12) zu erleichtern.

13. Vorrichtung nach Anspruch 1, dadurch gekennzeichnet, daß die Zentralkassette im Rahmen einer ungeraden Anzahl Kassetten (13a, 13b ..., 14a, 14b ...) unbeweglich in der senkrechten Mittelebene (12) der Vorrichtung (1) festgesetzt ist.

14. Vorrichtung nach Anspruch 1, dadurch gekennzeichnet, daß zur Regelung der Winkelpositionierung der Kassetten (13a, 13b ..., 14a, 14b ...) bezüglich der senkrechten Mittelebene (12) als Harken ausgestaltete Formen verwendet werden, deren Zähne den zwischen zwei aufeinanderfolgenden Kassetten oder zwischen zwei Gruppen von Kassetten, im Bereich deren stromabwärtsen Endes erhaltenen Abstand bestimmen.
